(19) Europäisches Patentamt / European Patent Office / Office européen des brevets

(11) **EP 3 339 115 B1**

(12) **FASCICULE DE BREVET EUROPEEN**

(45) Date de publication et mention
de la délivrance du brevet:
**14.04.2021 Bulletin 2021/15**

(51) Int Cl.:
**B60S 1/50** *(2006.01)*

(21) Numéro de dépôt: **17202217.0**

(22) Date de dépôt: **17.11.2017**

(54) **RÉSERVOIR DE LIQUIDE, EN PARTICULIER LAVE-GLACE, POUR UN SYSTÈME D'ESSUYAGE DE VÉHICULE**

FLÜSSIGKEITSTANK, INSBESONDERE FÜR SCHEIBENWASCHFLÜSSIGKEIT, FÜR EIN REINIGUNGSSYSTEM EINES FAHRZEUGS

LIQUID TANK, IN PARTICULAR FOR WINDSCREEN WASHER LIQUID, FOR A VEHICLE WIPER SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2016 FR 1661236**

(43) Date de publication de la demande:
**27.06.2018 Bulletin 2018/26**

(73) Titulaire: **Valeo Systèmes d'Essuyage**
**78322 Le Mesnil Saint Denis (FR)**

(72) Inventeurs:
• **THEBAULT, Denis**
**63500 ISSOIRE (FR)**
• **KOLANOWSKI, Grégory**
**63500 ISSOIRE (FR)**
• **BEZIAT, Baptiste**
**63500 ISSOIRE (FR)**

(74) Mandataire: **Valeo Visibility**
**Service Propriété Intellectuelle**
**34 rue Saint André**
**93012 Bobigny (FR)**

(56) Documents cités:
WO-A1-2014/054766    FR-A1- 2 951 267
JP-A- H06 346 889    US-A1- 2003 075 207
US-A1- 2006 124 761    US-A1- 2013 118 593
US-B1- 6 254 360

## Description

DOMAINE TECHNIQUE

La présente invention concerne notamment un dispositif et un procédé de détection d'un niveau de liquide dans un réservoir d'un système d'essuyage de véhicule.

ETAT DE L'ART

Un véhicule automobile est couramment équipé d'un système d'essuyage pour essuyer le pare-brise de ce qui pourrait gêner la vision des passagers du véhicule, tel que des éclaboussures, des insectes, du givre, et de la glace. Ce système comprend des essuie-glaces et un réservoir de liquide lave-glace installés sur le véhicule et des moyens d'aspersion pour permettre au liquide contenu dans le récipient d'être pulvérisé en direction du pare-brise.

Pour cela, au moins une pompe électrique est associée au réservoir. La pompe comprend une entrée de liquide destinée à être plongée dans le liquide contenu dans le réservoir, et au moins une sortie de liquide reliée aux moyens d'aspersion, tels que des buses de pulvérisation. La pompe peut être monodirectionnelle et comprendre une sortie de liquide reliée à des moyens d'aspersion de liquide sur une vitre du véhicule, ou bidirectionnelle et comprendre deux sorties de liquide reliées respectivement à des moyens d'aspersion sur deux vitres distinctes, par exemple avant et arrière, du véhicule.

Par ailleurs, un même réservoir peut être équipé de deux pompes, telles qu'une première pompe pour l'alimentation de moyens d'aspersion sur une vitre et une seconde pompe pour l'alimentation de moyens d'aspersion sur un projecteur ou phare du véhicule.

Les pompes qui peuvent être utilisées pour ce type d'application sont par exemple les pompes centrifuges lave-glace commercialisées par la société VDO®. Une pompe de ce type a une forme générale allongée et son entrée de fluide est soit orientée longitudinalement (parallèle à son axe d'allongement) soit orientée transversalement ou latéralement (perpendiculaire à son axe d'allongement). Pour un fonctionnement optimal de ce type de pompe, les fournisseurs préconisent en général, en position d'utilisation (c'est-à-dire en position montée sur un réservoir, lui-même monté sur un véhicule), de positionner la pompe de telle sorte que son axe d'allongement ne soit pas incliné de plus de 15° par rapport à la verticale ou à une normale à la surface de liquide dans le réservoir.

Dans la technique actuelle, un réservoir de liquide lave-glace est équipé d'un capteur de niveau permettant de renseigner un utilisateur du véhicule sur le niveau de liquide dans le réservoir et en particulier de l'alerter lorsque le niveau de liquide est trop bas. On peut utiliser un capteur de niveau dit « crocodile » ou flotteur, qui fonctionne grâce à un flotteur au contact du liquide dans le réservoir et destiné à être déplacé en fonction du niveau de liquide. Quand le niveau de liquide devient trop faible, le flotteur descend et rompt ainsi un contact de manière à ouvrir ou fermer un circuit.

On connaît également un capteur de niveau à électrodes qui permet de détecter si les (deux) électrodes sont en contact avec du liquide, ou bien si une seule des électrodes est noyée, et donc de renseigner sur le niveau de liquide dans le réservoir.

Cependant, l'inconvénient de ces capteurs est qu'ils sont coûteux et créent un risque de fuite supplémentaire au niveau du réservoir. Ils doivent aussi être reliés à l'unité de contrôle moteur du type ECU du véhicule par un câble électrique qui est coûteux également et source potentielle de défaillances

A titre d'exemple, le document FR 2 951 267 A1 divulgue un dispositif de détection du niveau dans un réservoir selon l'art antérieur.

L'invention propose un perfectionnement à cette technologie, qui est simple, efficace et économique.

EXPOSE DE L'INVENTION

L'invention propose à cet effet un dispositif de détection d'un niveau de liquide dans un réservoir d'un système d'essuyage de véhicule, en particulier automobile, ledit réservoir étant équipé d'au moins une pompe électrique d'alimentation du système avec du liquide contenu dans le réservoir tel que défini par la revendication 1 en annexe.

L'invention propose ainsi d'utiliser la pompe associée au réservoir comme moyen de détection ou « capteur » pour détecter la présence ou l'absence de liquide dans le réservoir. Ceci est rendu possible par la surveillance de la consommation de courant de la pompe, qui est directement proportionnelle à la vitesse de rotation du moteur électrique de la pompe.

Les inventeurs ont constaté que la pompe électrique d'un réservoir de liquide lave-glace fonctionne de la façon suivante. Plus elle est chargée en liquide, moins son rotor tourne vite et plus elle consomme de courant. Son couple mécanique est alors important. Au contraire, moins elle est chargée en liquide, plus son rotor tourne vite et moins elle consomme de courant. Son couple mécanique est dans ce cas faible. Il est ainsi possible d'estimer le moment où le réservoir est vide. En effet, lorsque l'intensité aux bornes de la pompe chute brutalement, cela signifie que la pompe est partiellement remplie en liquide ou n'est plus remplie en liquide, c'est-à-dire que son entrée en liquide est partiellement immergée ou n'est plus immergée dans le liquide, et donc que le niveau de liquide dans le réservoir est inférieur à un seuil prédéterminé, voire est vide.

Le dispositif selon l'invention peut comprendre en outre des moyens d'affichage et/ou d'émission d'une alerte à l'attention d'un utilisateur dudit système, en particulier lorsque ladite détection intervient.

La présente invention concerne également un système d'essuyage de véhicule, en particulier automobile, comportant un réservoir de liquide, en particulier lave-glace, et un dispositif tel que décrit ci-dessus, dans lequel ledit réservoir est équipé d'au moins une pompe électrique d'alimentation du système avec du liquide contenu dans le réservoir.

Selon l'invention, ladite pompe ou l'une desdites pompes comprend un axe longitudinal destiné à être incliné d'un angle supérieur à 15° et inférieur ou égal à 80° par rapport à une normale (H) à la surface du liquide contenu dans le réservoir lorsque ce dernier est rempli de liquide et est en position montée dans un véhicule.

Les inventeurs ont constaté que l'angle d'inclinaison de la pompe, en position d'utilisation, c'est-à-dire en position montée sur le véhicule, a une influence sur sa consommation en courant. Ils ont en effet constaté que plus une pompe est inclinée, moins la chute de courant est brutale lorsque la pompe est partiellement remplie. Il est possible de se servir de cette propriété pour optimiser le moment d'alerte de l'utilisateur en cas de détection d'un faible niveau de liquide dans le réservoir.

La présente invention concerne également un système d'actionnement d'un essuie-glace, en particulier de véhicule automobile, comprenant un moteur électrique et un boîtier électronique de commande du moteur, caractérisé en ce que ledit boîtier comprend au moins un dispositif tel que décrit ci-dessus.

La présente invention concerne également un véhicule, en particulier automobile, comportant un système tel que décrit ci-dessus.

La présente invention concerne également un véhicule, en particulier automobile, comportant une unité de contrôle moteur du type ECU, caractérisé en ce que ladite unité comprend au moins un dispositif tel que décrit ci-dessus.

La présente invention concerne également un procédé de détection d'un niveau de liquide dans un réservoir d'un système d'essuyage de véhicule, en particulier automobile, ledit réservoir étant équipé d'au moins une pompe électrique d'alimentation du système avec du liquide contenu dans le réservoir, caractérisé en ce qu'il comprend, lors de l'utilisation de la pompe :

-   la surveillance du courant consommé par la pompe, et la détection d'une chute de consommation de courant de la pompe, significative d'un remplissage partiel en liquide de la pompe et donc d'un niveau de liquide dans le réservoir inférieur à un seuil prédéterminé.

La surveillance du courant consommé par la pompe peut consister à suivre l'évolution de ce courant au cours du temps, et la détection de la chute de consommation de courant peut consister à déterminer un temps t1 à partir duquel la valeur de courant consommé est inférieur à une première valeur seuil.

La détection de la chute de consommation de courant peut consister à déterminer un autre temps t2 à partir duquel la valeur de courant consommé est inférieure à une seconde valeur seuil inférieure à la première valeur seuil, la pente de la courbe d'évolution du courant consommé au cours du temps étant plus important à partir du temps t2 qu' à partir du temps t1.

La présente invention concerne également un réservoir de liquide, en particulier lave-glace, pour un système d'essuyage de véhicule, ledit réservoir comprenant un corps définissant un volume interne de stockage dudit liquide, et au moins une pompe électrique dont une entrée débouche dans ledit volume, ladite au moins une pompe ayant une forme allongée et comportant un axe longitudinal, caractérisé en ce que ledit axe longitudinal est destiné à être incliné d'un angle supérieur à 15° par rapport à une normale à la surface libre du liquide contenu dans le réservoir lorsque ce dernier est rempli de liquide et est en position montée dans un véhicule.

Le réservoir peut comprendre une ou plusieurs des caractéristiques suivantes, prises isolément les unes des autres ou en combinaison les unes avec les autres :

-   ladite au moins une pompe est du type à entrée longitudinale ;

-   ladite au moins une pompe est du type à entrée latérale ;

-   ledit axe longitudinal est destiné à être incliné d'un angle supérieur à 20, 30°, ou 40°par rapport à ladite normale ;

-   ledit axe longitudinal est destiné à être incliné d'un angle inférieur ou égal à 90°ou 80°par rapport à ladite normale ;

-   notamment, suivant l'invention, ledit axe longitudinal est destiné à être incliné d'un angle compris entre 15°et 80°par rapport à la normale p récédemment décrite, à savoir une normale à la surface libre du liquide contenu dans le réservoir lorsque ce dernier est rempli de liquide et est en position montée dans un véhicule.

-   le réservoir comprend au moins deux pompes dont les axes longitudinaux sont destinés à être inclinés avec des angles différents dont au moins un est supérieur à 15°par rapport à la normale précitée ;

-   les au moins deux pompes sont agencées dans des zones distinctes et espacées du réservoir ; une première pompe peut notamment être située dans la zone inférieure du réservoir, par exemple au voisinage direct de l'extrémité inférieure de ce réservoir, et la seconde pompe peut notamment être située sensiblement à mi-hauteur du réservoir ; en d'autres termes, les pompes sont agencées dans des zones différentes du réservoir, à des hauteurs différentes du réservoir, relativement à une direction parallèle à la normale précédemment décrite, à savoir une normale à la surface libre du liquide contenu dans le réservoir lorsque ce dernier est rempli de liquide et est en position montée dans un véhicule ; une première pompe est disposée dans une partie inférieure du réservoir et présentant une inclinaison par rapport à la normale d'un angle de valeur inférieure à 15°et une deuxième pompe étant disposée à mi-hauteur du réservoir et présentant une inclinaison par rapport à la normale d'un angle de valeur supérieure à 15°. La première pompe peut dans ce cas être utilisé pour l'alimentation du système de canalisations et la deuxième pompe est par exemple utilisée pour l'alimentation en liquide lave-glace de moyens de projection sur des projecteurs du véhicule ;

- ledit axe longitudinal est un axe de rotation du rotor de la pompe, et
- ladite entrée de la pompe est orientée vers le bas du réservoir.

L'invention concerne également un système d'essuyage de véhicule, en particulier automobile, comportant au moins un réservoir tel que décrit ci-dessus.

L'invention concerne encore un véhicule, en particulier automobile, comportant un réservoir ou un système tel que décrit ci-dessus.

## DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :

- la figure 1 est une vue schématique d'un système d'essuyage d'une vitre, ici de véhicule automobile ;
- la figure 2 est un graphe montrant l'évolution du courant consommé par une pompe électrique en fonction du temps,
- la figure 3 est une vue très schématique en perspective d'un réservoir de liquide lave-glace équipé de pompes,
- les figures 4 et 5 sont des vues très schématiques de pompes, respectivement à entrée latérale et à entrée longitudinale, qui sont inclinées par rapport à une normale à la surface d'un liquide dans lequel leur entrée est plongée,
- la figure 6 est un graphe montrant l'évolution de la chute de courant consommé par une pompe électrique en fonction de son angle d'inclinaison,
- la figure 7 est un graphe montrant l'évolution de la chute de courant consommé par une pompe électrique en fonction du type de pompe utilisé,
- la figure 8 est un autre graphe montrant l'évolution du courant consommé par une pompe électrique en fonction du temps, et
- la figure 9 est une autre vue très schématique en perspective d'un réservoir de liquide lave-glace équipé d'une pompe, et
- la figure 10 est une vue schématique similaire à celle de la figure 5 et montre en outre à plus grande échelle la position de l'entrée longitudinale de la pompe vis-à-vis de la surface du liquide dans lequel elle est plongée.

## DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

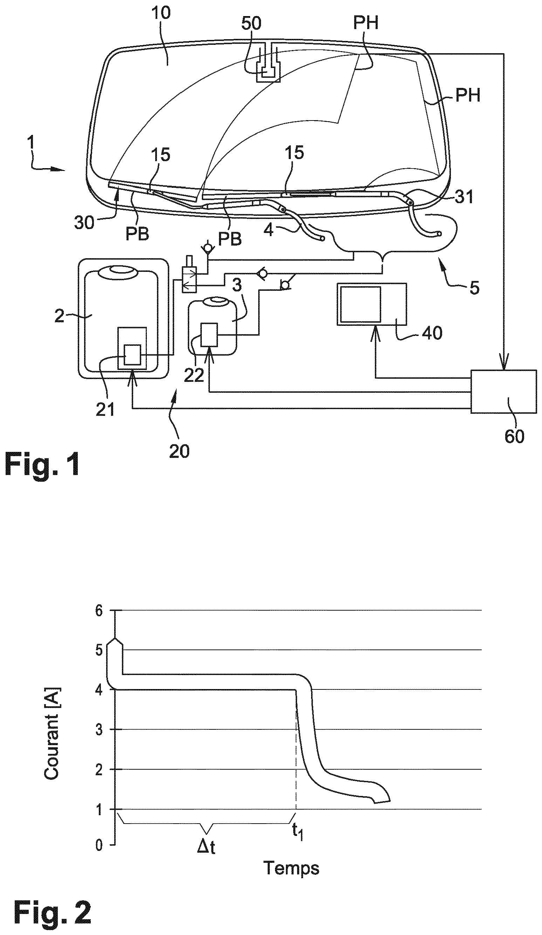

La figure 1 représente un système d'essuyage 1 d'une vitre, telle qu'un pare-brise 10 de véhicule automobile. De préférence, le système 1 est agencé pour pouvoir également nettoyer des insectes collés sur le pare-brise 10 ou pour dégivrer le pare-brise 10.

Dans l'exemple représenté, un tel système 1 comprend généralement un premier réservoir 2 et au moins un deuxième réservoir 3.

Le premier réservoir 2 contient un liquide de lavage utilisé pour faire exécuter par le système 1 une fonction de lavage standard lorsque la vue au travers du pare-brise 10 est gênée par des salissures faciles à nettoyer.

Le deuxième réservoir 3 contient un liquide spécifique par exemple un liquide de dégivrage pour faire exécuter par le système 1 une fonction de dégivrage. Avantageusement, le deuxième réservoir 3 se présente sous la forme d'une cartouche amovible. Il est ainsi possible, par exemple en changeant la cartouche, de remplacer le liquide de dégivrage par un liquide comprenant un détergent spécifique au nettoyage des insectes. Dans les deux cas, le deuxième réservoir 3 contient un liquide spécifique, généralement plus onéreux que le liquide de lavage du premier réservoir 2 et destiné à être utilisé moins souvent.

Le système 1 comprend également un système de canalisations 5 reliant le premier réservoir 2 et le deuxième réservoir 3 à des orifices 15, pouvant être formés par des gicleurs, par lesquels sont éjectés du liquide de lavage et/ou du liquide spécifique sur le pare-brise 10.

Il comprend en outre un système de pompe 20 destiné à faire circuler du liquide de lavage et/ou du liquide spécifique dans le système de canalisations 5 jusqu'à éjection par les orifices 15. Le système de pompe 20 comprend ici deux pompes 21, 22 indépendantes. Une première pompe 21 est associée au premier réservoir 2 et est destinée à faire circuler du liquide de lavage dans le système de canalisations 5 et une deuxième pompe 22 est associée au deuxième réservoir 3 et est destinée à faire circuler du liquide spécifique dans le système de canalisations 5.

Les rotors des première 21 et deuxième 22 pompes sont, par exemple, mues par des moteurs à courant continu et sont agencées pour pouvoir fonctionner à au moins un niveau de puissance donné pendant des durées choisies, afin de faire circuler un débit de liquide adapté aux cycles de fonctionnement du système 1.

Le système 1 comprend au moins un balai d'essuyage 30 monté sur un bras 31 et apte à se déplacer sur le pare-brise 10 entre une position basse PB et une position haute PH, et inversement. Dans l'exemple représenté, le système 1 comprend deux balais d'essuyage 30.

De manière à profiter du déplacement des balais d'essuyage 30 pour projeter du liquide sensiblement sur la totalité de la surface de pare-brise 10 qu'ils balayent, les gicleurs 15 peuvent être répartis sur la longueur de chaque balai d'essuyage 30. Dans une variante, il est possible d'installer un ou des gicleurs sur le bras 31, par exemple agencés pour projeter le liquide tout le long du balai d'essuyage 30 à partir d'une position centrale.

Les orifices 15 précités sont disposés de manière à projeter du liquide de lavage et/ou du liquide spécifique vers le haut des balais d'essuyage 30, c'est-à-dire vers le haut du pare-brise 10. Le système pourrait aussi bien être mis en œuvre avec des orifices 15 orientés des deux côtés des balais d'essuyage 30, la projection de liquide s'effectuant alors soit uniquement dans le sens de la montée, soit uniquement du côté d'avancement du balai. Il est également possible que les orifices 15 orientés des deux côtés des balais d'essuyage 30 projettent simultanément le liquide.

Le système 1 comprend également un moteur 40 destiné à entraîner les balais d'essuyage 30 entre leurs positions basses et leurs positions hautes respectives. Le système 1 comprend en outre un capteur 50 de température extérieure du véhicule. Il est situé ici sur une partie haute du pare-brise, au centre de celui-ci, sans que cette position ne soit limitative. Le capteur 50 peut être directement exposé à l'air ambiant extérieur du véhicule et est destiné à mesurer la température extérieure, par exemple dans une plage de valeurs allant de -50°C à +50°C.

Le système 1 comprend de plus un boitier électronique 60 capable de commander le moteur 40 d'entraînement des balais d'essuyage 30 et l'activation du système de pompe 20, les pompes 21, 22 pouvant être commandées de manière indépendante.

Les pompes 21, 22 sont par exemple celles commercialisées par la société VDO®. Il s'agit de pompes électriques comportant un moteur électrique, par exemple 12 V, associé à un rotor, par exemple à hélice, pour l'entraînement du liquide depuis le réservoir 2, 3 considéré jusqu'au système de canalisations 5. Les pompes peuvent être mono- ou bidirectionnelles.

Le graphe de la figure 2 illustre l'évolution du courant consommé par une pompe, telle que la pompe 21 ou 22, en fonction du temps. La courbe comprend une première partie, sous la forme d'un plateau, dans laquelle le courant consommé est constant (ici à une valeur de l'ordre de 4A). Dans la période de temps $\Delta t$ correspondante, le niveau de liquide dans le réservoir équipé de la pompe considéré, est suffisant. Cela signifie que suffisamment de liquide peut être entraîné par la pompe via son entrée. Dans ce cas, on dit que la pompe est chargée (pleine de liquide). Le rotor de la pompe tourne alors lentement et son moteur consomme une valeur constante de courant. Le couple mécanique du rotor est alors important.

Au contraire, lorsque le niveau de liquide dans le réservoir est trop bas, la pompe est partiellement chargée ou non chargée. C'est-à-dire qu'une quantité insuffisante de liquide passe par son entrée pour remplir pleinement la pompe. Son rotor tourne alors plus vite et elle consomme moins de courant. Le couple mécanique du rotor de pompe est dans ce cas faible. On constate alors une baisse significative, appelée chute, de consommation de courant, visible à la figure 2. La courbe comprend ainsi une seconde partie où la valeur de la consommation de courant s'effondre à un temps t1 correspondant au moment où le niveau de liquide dans le réservoir est trop bas pour alimenter efficacement la pompe.

On comprend dès lors que la surveillance de la consommation de courant d'une pompe de réservoir de liquide permet d'estimer le moment où le réservoir est vide. Un aspect de l'invention consiste donc à détecter une chute de consommation de courant de la pompe, significative d'un remplissage partiel en liquide de la pompe et donc d'un niveau de liquide dans le réservoir inférieur à un seuil prédéterminé.

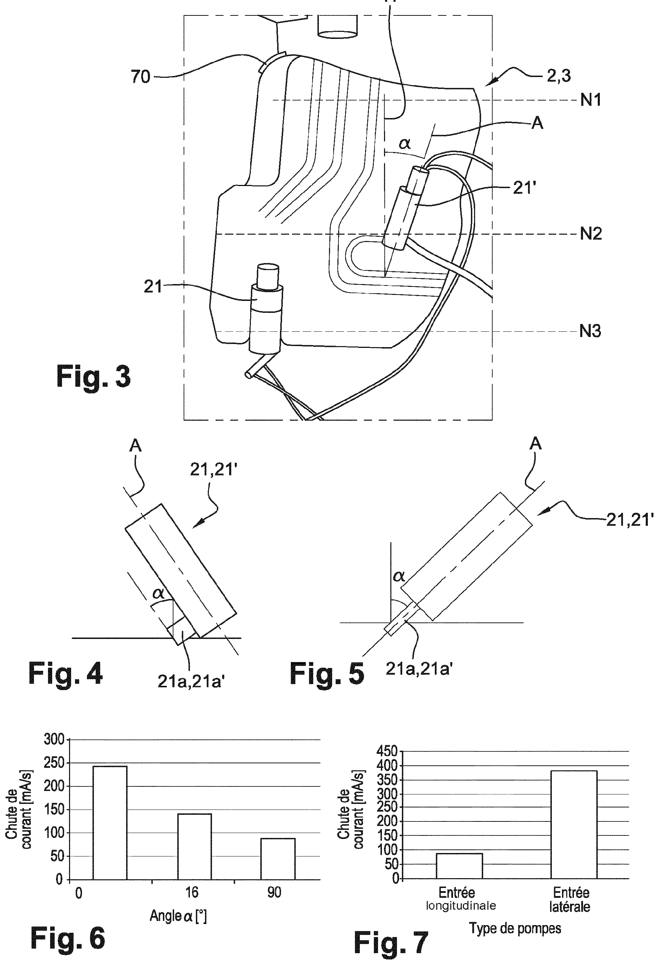

La figure 3 montre un réservoir de liquide lave-glace 2, 3 équipé de deux pompes 21, 21'. Le réservoir a une forme générale parallélépipédique et comprend une ouverture 70 de remplissage à son extrémité supérieure.

On désigne par N1, N2 et N3 différents niveaux de remplissage du réservoir. Ces niveaux correspondent à l'endroit où se situe la surface supérieure du liquide dans le réservoir. Le premier niveau N1 est un niveau maximal de remplissage du réservoir. Le niveau N2 est un niveau faible ou insuffisant de remplissage du réservoir, et le niveau N3 est un niveau quasi nul de remplissage du réservoir.

En position de montage et d'utilisation, le réservoir est logé dans un environnement encombré du moteur du véhicule. Le niveau de liquide est alors sensiblement horizontal à l'arrêt du véhicule et on définit par H une normale à la surface du niveau de liquide, quel qu'il soit. H a ainsi une orientation sensiblement verticale à l'arrêt du véhicule.

Les pompes 21, 21' sont situées dans des zones distinctes et espacées du réservoir 2, 3. Une première pompe 21 est située à l'extrémité inférieure du réservoir. Elle est par exemple utilisée pour l'alimentation du système de canalisations 5. La seconde pompe 21' est située sensiblement à mi-hauteur du réservoir et est par exemple utilisée pour l'alimentation en liquide lave-glace de moyens de projection sur des projecteurs du véhicule.

Chaque pompe a une forme générale allongée et son entrée 21a, 21'a de fluide est soit orientée longitudinalement (parallèle à son axe d'allongement - cf. figure 5), soit orientée transversalement ou latéralement (perpendiculaire à son axe d'allongement - cf. figure 4).

Pour un fonctionnement optimal de ce type de pompe, les fournisseurs préconisent en général, en position d'utilisation (c'est-à-dire en position montée sur un réservoir, lui-même monté sur un véhicule), de positionner la pompe de telle sorte que son axe d'allongement ne soit pas incliné de plus de 15°par rapport à la verticale ou à une normale H. L'axe longitudinal de la pompe peut être confondu avec l'axe de rotation de son rotor.

Au contraire, selon l'invention, au moins une des pompes du réservoir peut être inclinée d'un angle α supérieur à 15°. Plus particulièrement, cette pompe du réservoir spécifiquement inclinée est agencée de sorte que l'angle α d'inclinaison entre l'axe d'allongement et la normale H tel que précédemment évoqué est compris entre 15°et 80°.

Dans l'exemple représenté à la figure 3, la première pompe, ou pompe inférieure, 21 a son axe d'allongement sensiblement parallèle à la normale H. Elle n'est ainsi pas inclinée. C'est la deuxième pompe, ou pompe supérieure, 21' qui présente une inclinaison conforme à la caractéristique de l'invention, c'est-à-dire avec un axe d'allongement incliné vis-à-vis de H d'un angle α supérieur à 15°, et plus particulièrement compris entre 15°et 80°

Des pompes présentant une telle inclinaison caractéristique de l'invention sont visibles aux figures 4 et 5.

Une pompe à entrée latérale est représentée à la figure 4 ; une pompe à entrée longitudinale est représentée à la figure 5. Dans le cas d'une pompe à entrée latérale (figure 4), l'extrémité supérieure de la pompe opposée à celle supportant l'entrée de liquide est inclinée vers le bas, du côté de son entrée, de façon à ce que son entrée débouche vers le bas (plutôt que vers le haut) et que cette entrée soit apte à pomper le liquide contenu dans le réservoir. Dans cette position, l'entrée de liquide dans la pompe peut avoir une orientation similaire à celle d'une entrée longitudinale d'une pompe inclinée (figure 5).

Lors de la mise au point de l'invention, il a en effet été constaté que l'angle d'inclinaison α de la pompe par rapport à la normale H, ainsi que le type de pompe, ont une influence sur la chute de consommation de courant de cette pompe décrite précédemment.

La figure 6 montre l'évolution de la chute de courant en mA/s en fonction de l'angle d'inclinaison α d'une pompe à entrée longitudinale, et en particulier de son axe longitudinal A, lorsque la pompe se remplit partiellement. Ainsi, plus l'angle d'inclinaison α d'une pompe est important et plus la chute de consommation de courant de cette pompe est faible. L'inclinaison de cette pompe peut aller jusqu'à 90°. Autrement dit, dans le cas d'une pompe à entrée longitudinale, cela revient à positionner son entrée dans une direction latérale (sur un côté) Selon l'invention, l'inclinaison de la pompe est inférieure ou égale à 80°.

La raison pour laquelle une chute différente est observée en fonction de l'inclinaison de la pompe peut résider dans le fait que les pompes de lave-glace ne fonctionnent pas en aspiration, mais doivent être amorcées. Lorsque la pompe inclinée se remplit partiellement, une partie de son entrée est exposée à l'air, tandis que l'autre partie est immergée dans le liquide. La limite séparant l'air du liquide est appelée seuil d'amorçage. Plus la pompe est inclinée, moins le passage du seuil d'amorçage sera brutal, et inversement. Si la pompe est positionnée parallèlement à la normale de la surface du liquide (α =0), le seuil d'amorçage sera passé brutalement ce qui entraînera une chute brutale du débit de fluide et de l'intensité de courant consommé par la pompe.

La figure 7 permet de constater que la chute de courant en cas de remplissage partiel de la pompe est plus importante pour une pompe à entrée latérale que pour une pompe à entrée longitudinale.

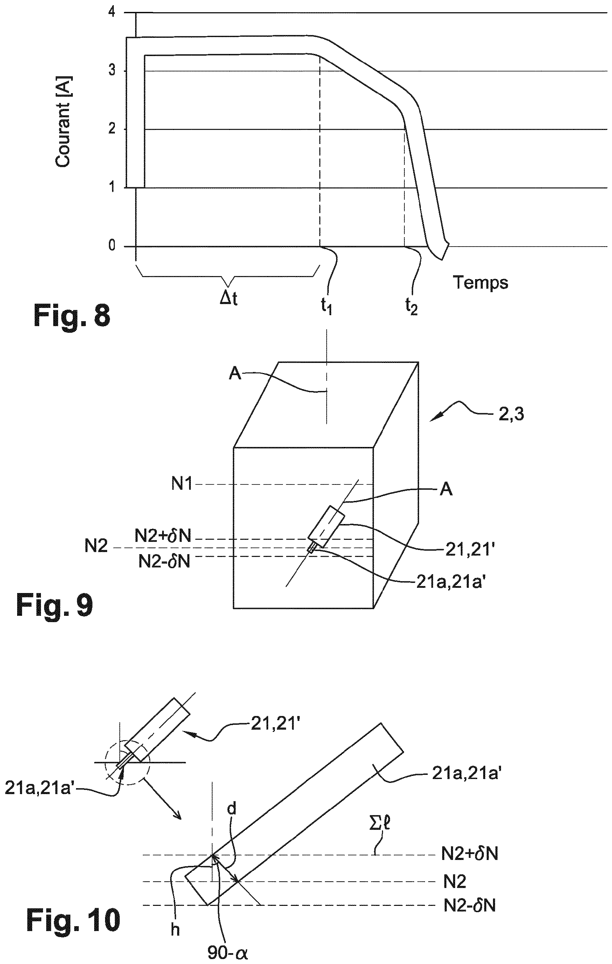

La figure 8 est un graphe similaire à celui de la figure 2 et illustre l'influence des deux paramètres décrits ci-dessus (angle d'inclinaison et type de pompe) sur la chute de la consommation de courant en cas de remplissage partiel de la pompe. La courbe de la figure 8 correspond à une pompe à entrée longitudinale inclinée, telle que celle de la figure 5, alors que la courbe de la figure 2 correspond à une pompe à entrée longitudinale en position verticale(α =0), telle que la pompe inférieure 21 de la figure 3.

La courbe de la figure 8 va maintenant être décrite en relation avec la pompe représentée aux figures 9 et 10.

La courbe de la figure 8 comprend toujours une première partie, sous la forme d'un plateau, dans laquelle le courant consommé est constant (ici à une valeur de l'ordre de 3,5A). Dans la période de temps Δt correspondante, le niveau de liquide dans le réservoir équipé de la pompe considéré, est suffisant (au-dessus de N2). Suffisamment de liquide peut être aspiré par la pompe via son entrée.

Lorsque le niveau de liquide arrive au niveau de l'entrée de la pompe, par exemple une pompe à entrée longitudinale inclinée d'un angle de 45°, la pompe est partiellement chargée et la consommation de courant décroît à une vitesse relativement lente. La courbe comprend une seconde partie où la valeur de la consommation de courant diminue donc entre le temps t1 correspondant au moment où le niveau de liquide dans le réservoir atteint un niveau N2+δN, et le temps t2 correspondant au moment où le niveau de liquide dans le réservoir atteint un niveau N2-δN (cf. figure 9 ou 10). A partir du temps t2, la consommation de courant chute brutalement, comme dans le cas précédent, du fait du défaut de remplissage en liquide de la pompe. Le niveau de liquide dans le réservoir est alors au-dessous de N2.

Avantageusement, l'utilisateur du véhicule peut recevoir une alerte dès la détection de la diminution de la consommation de courant, donc idéalement à t1 ou juste après, pendant la période entre t1 et t2. Cela permet de prévenir l'utilisateur juste avant que le réservoir soit vide (niveau inférieur à N2-δN) et que la pompe ne puisse plus être opérationnelle du fait du niveau trop faible de liquide dans le réservoir. La chute de courant étant proportionnelle à la diminution du débit délivré par la pompe, plus elle est faible plus un débit minimum est maintenu à un niveau suffisant pendant un certain temps permettant de prévenir l'utilisateur avant que le réservoir ne soit vide.

De plus, il est possible de déterminer le volume de liquide pouvant s'écouler durant la première chute de courant, c'est-à-dire le volume de liquide pouvant encore être délivré par la pompe. Ce volume est dépendant de l'angle d'inclinaison $\alpha$ et de la surface (aire) du liquide (c'est-à-dire l'aire de sa surface libre) dans le réservoir.

La formule permettant de calculer ce volume est la suivante :

$$h = \cos(90-\alpha) * d$$

avec h, la hauteur de liquide et d, le diamètre de l'entrée 21a, 21a' de la pompe (cf. figure 10) ;
et $V = h * \Sigma I$
avec V, le volume de liquide dans le réservoir pouvant être entraîné par la pompe (entre les niveaux N2+$\delta$N et N2-$\delta$N), et $\Sigma I$, la surface du liquide dans le réservoir mesurée au niveau de l'entrée de la pompe.

Ainsi, après avoir alerté l'utilisateur du fait d'un niveau de liquide bas dans le réservoir, avantageusement un cycle « tampon » dans le réservoir est toujours disponible.

En pratique, la surveillance du courant consommé par la pompe peut consister à suivre l'évolution de ce courant au cours du temps. La détection de la chute de consommation de courant peut consister à déterminer le temps t1 à partir duquel la valeur de courant consommé est inférieure à une première valeur seuil, par exemple égale à la valeur du courant au niveau du plateau (3,5A dans l'exemple précité).

La détection de la chute de consommation de courant peut consister à déterminer l'autre temps t2 à partir duquel la valeur de courant consommé est inférieure à une seconde valeur seuil inférieure à la première valeur seuil, et par exemple de 2,5A. La pente de la courbe d'évolution du courant consommé au cours du temps est plus importante au temps t2 qu'au temps t1, comme on peut le constater à la figure 8.

Les moyens de détection de la chute de courant comprennent par exemple un composant électronique du type SmartMOS intelligent avec mesure de courant aux bornes de la pompe, de son moteur, ou de ses moyens d'alimentation en courant.

Ces moyens de détection peuvent être intégrés au système d'actionnement d'essuie-glace. Ce système comprend le moteur électrique 40 précité et le boîtier électronique 60 de commande du moteur. Les moyens de détection et d'alerte de l'utilisateur peuvent être intégrés à ce boîtier.

En variante, les moyens de détection et d'alerte peuvent être intégrés à l'unité de contrôle moteur du type ECU du véhicule automobile. De façon connue, l'alerte de l'utilisateur peut se faire par un moyen visuel et/ou sonore.

**Revendications**

1. Dispositif de détection d'un niveau de liquide dans un réservoir de liquide (2, 3), en particulier lave-glace, d'un système d'essuyage (1) de véhicule, en particulier automobile, ledit dispositif de détection comprenant un réservoir et au moins une pompe électrique (21, 21') d'alimentation du système avec du liquide contenu dans le réservoir,
ledit réservoir comprenant un corps définissant un volume interne de stockage dudit liquide, et
ladite pompe comprenant une entrée (21a, 21a') débouchant dans ledit volume, ladite au moins une pompe ayant une forme allongée et comportant un axe longitudinal (A), ladite au moins une pompe ayant une entrée (21a) orientée parallèlement ou perpendiculairement à l'axe longitudinal (A),
**caractérisé en ce que** ledit axe longitudinal est destiné à être incliné d'un angle ($\alpha$) supérieur à 15° et inférieur ou égal à 80° par rapport à une normale (H) à la surface libre du liquide contenu dans le réservoir lorsque ce dernier est rempli de liquide et est en position montée dans un véhicule et **en ce que** ledit dispositif comporte des moyens de surveillance du courant consommé par la pompe lors de son utilisation, et de détection d'une chute de consommation de courant de la pompe, significative d'un remplissage partiel en liquide de la pompe et donc d'un niveau de liquide dans le réservoir inférieur à un seuil prédéterminé.

2. Dispositif selon la revendication précédente, dans lequel ledit axe longitudinal (A) est destiné à être incliné d'un angle ($\alpha$) supérieur à 20° et inférieur ou égal à 80° par rapport à ladite normale (H).

3. Dispositif selon l'une des revendications précédentes, dans lequel ledit axe longitudinal (A) est destiné à être incliné d'un angle ($\alpha$) supérieur à 30° et inférieur ou égal à 80° par rapport à ladite normale (H).

4. Dispositif selon l'une des revendications précédentes, dans lequel ledit axe longitudinal (A) est destiné à être incliné d'un angle ($\alpha$) supérieur à 40° et inférieur ou égal à 80° par rapport à ladite normale (H).

5. Dispositif selon l'une des revendications précédentes, dans lequel il comprend au moins deux pompes (21, 21') dont les axes longitudinaux (A) sont destinés à être inclinés avec des angles différents dont au moins un est supérieur à 15° et inférieur ou égal à 80° par rapport à la normale (H) précitée.

6. Dispositif selon la revendication précédente, dans lequel les deux pompes sont agencées dans des zones différentes du réservoir, à des hauteurs différentes du réservoir, une première pompe (21) étant disposée dans une partie inférieure du réservoir et présentant une inclinaison par rapport à la normale (H) d'un angle de valeur inférieure à 15° et une deuxième pompe (21') étant disposée à mi-hauteur du réservoir et présentant une inclinaison par rapport à la normale (H) d'un angle (α) de valeur supérieure à 15° et inférieure ou égale à 80°.

7. Dispositif selon l'une des revendications précédentes, dans lequel ledit axe longitudinal (A) est un axe de rotation du rotor de la pompe.

8. Dispositif selon l'une des revendications précédentes, dans lequel ladite entrée (21a, 21a') de la pompe est orientée vers le bas du réservoir (2, 3).

9. Système d'essuyage (1) de véhicule, en particulier automobile, comportant au moins un dispositif de détection d'un niveau de liquide dans un réservoir de liquide (2, 3), selon l'une des revendications précédentes.

10. Véhicule, en particulier automobile, comportant un dispositif de détection d'un niveau de liquide dans un réservoir de liquide (2, 3) ou un système (1) selon l'une des revendications précédentes.

**Patentansprüche**

1. Vorrichtung zur Erkennung eines Flüssigkeitsstandes in einem Flüssigkeitsbehälter (2, 3), insbesondere für Scheibenwaschflüssigkeit, eines Wischersystems (1) eines Fahrzeugs, insbesondere eines Kraftfahrzeugs, wobei die Vorrichtung zur Erkennung einen Behälter und wenigstens eine elektrische Pumpe (21, 21') zur Versorgung des Systems mit Flüssigkeit, die in dem Behälter enthalten ist, umfasst,
wobei der Behälter einen Körper umfasst, der ein Innenvolumen zur Speicherung der Flüssigkeit definiert, und
wobei die Pumpe einen Eingang (21a, 21a') umfasst, der in das Volumen mündet, wobei die wenigstens eine Pumpe eine lang gestreckte Form hat und eine Längsachse (A) aufweist, wobei die wenigstens eine Pumpe einen Eingang (21a) aufweist, der parallel oder senkrecht zur Längsachse (A) ausgerichtet ist, **dadurch gekennzeichnet, dass** die Längsachse dazu bestimmt ist, in einem Winkel (α), der größer als 15° und kleiner oder gleich 80° ist, in Bezug auf eine Normale (H) zu der freien Oberfläche der Flüssigkeit, die in dem Behälter enthalten ist, geneigt zu sein, wenn dieser Letztere mit Flüssigkeit gefüllt ist und sich in einer in ein Fahrzeug eingebauten Position befindet, und dadurch, dass die Vorrichtung Mittel zur Überwachung des von der Pumpe während ihrer Verwendung verbrauchten Stroms und zur Erkennung eines Abfalls des Stromverbrauchs der Pumpe, der für eine teilweise Entleerung der Pumpe von Flüssigkeit indikativ ist, und somit für einen Flüssigkeitsstand im Behälter, der niedriger als ein vorbestimmter Schwellenwert ist, aufweist.

2. Vorrichtung nach dem vorhergehenden Anspruch, wobei die Längsachse (A) dazu bestimmt ist, in einem Winkel (α), der größer als 20° und kleiner oder gleich 80° ist, in Bezug auf die Normale (H) geneigt zu sein.

3. Vorrichtung nach einem der vorhergehenden Ansprüche, wobei die Längsachse (A) dazu bestimmt ist, in einem Winkel (α), der größer als 30° und kleiner oder gleich 80° ist, in Bezug auf die Normale (H) geneigt zu sein.

4. Vorrichtung nach einem der vorhergehenden Ansprüche, wobei die Längsachse (A) dazu bestimmt ist, in einem Winkel (α), der größer als 40° und kleiner oder gleich 80° ist, in Bezug auf die Normale (H) geneigt zu sein.

5. Vorrichtung nach einem der vorhergehenden Ansprüche, wobei sie wenigstens zwei Pumpen (21, 21') umfasst, deren Längsachsen (A) dazu bestimmt sind, mit unterschiedlichen Winkeln, von denen wenigstens einer größer als 15° und kleiner oder gleich 80° ist, in Bezug auf die genannte Normale (H) geneigt zu sein.

6. Vorrichtung nach dem vorhergehenden Anspruch, wobei die zwei Pumpen in verschiedenen Bereichen des Behälters angeordnet sind, auf unterschiedlichen Höhen des Behälters, wobei eine erste Pumpe (21) in einem unteren Teil des Behälters angeordnet ist und eine Neigung in Bezug auf die Normale (H) in einem Winkel, dessen Wert kleiner als 15° ist, aufweist und eine zweite Pumpe (21') auf halber Höhe des Behälters angeordnet ist und eine Neigung in Bezug auf die Normale (H) in einem Winkel (α), dessen Wert größer als 15° und kleiner oder gleich 80° ist, aufweist.

7. Vorrichtung nach einem der vorhergehenden Ansprüche, wobei die Längsachse (A) eine Drehachse des Rotors der Pumpe ist.

8. Vorrichtung nach einem der vorhergehenden Ansprüche, wobei der Eingang (21a, 21a') der Pumpe zur Unterseite des Behälters (2, 3) gerichtet ist.

**9.** Wischersystem (1) eines Fahrzeugs, insbesondere eines Kraftfahrzeugs, welches wenigstens eine Vorrichtung zur Erkennung eines Flüssigkeitsstandes in einem Flüssigkeitsbehälter (2, 3) nach einem der vorhergehenden Ansprüche aufweist.

**10.** Fahrzeug, insbesondere Kraftfahrzeug, welches eine Vorrichtung zur Erkennung eines Flüssigkeitsstandes in einem Flüssigkeitsbehälter (2, 3) oder ein System (1) nach einem der vorhergehenden Ansprüche aufweist.


**Claims**

**1.** Device for detecting a level of liquid in a liquid tank (2, 3), particularly a washer fluid tank, of a vehicle, particularly motor vehicle, wiper system (1), said detection device comprising a tank and at least one electric pump (21, 21') for supplying the system with liquid contained in the tank,
said tank comprising a body defining an internal volume for storing said liquid, and
said pump comprising an inlet (21a, 21a') opening into said volume, said at least one pump having an elongate shape and comprising a longitudinal axis (A), said at least one pump having an inlet (21a) oriented parallel or perpendicular to the longitudinal axis (A), **characterized in that** said longitudinal axis is intended to be inclined by an angle ($\alpha$) greater than 15° and less than or equal to 80° with respect to a normal (H) to the free surface of the liquid contained in the tank when the latter is filled with liquid and is in the position in which it is mounted in a vehicle, and **in that** said device comprises means for monitoring the current drawn by the pump when it is in use, and for detecting a drop in the current drawn by the pump, this being indicative of the pump filling with liquid only partially and therefore of a level of liquid in the tank that is below a predetermined threshold.

**2.** Device according to the preceding claim, in which said longitudinal axis (A) is intended to be inclined by an angle ($\alpha$) greater than 20° and less than or equal to 80° with respect to said normal (H).

**3.** Device according to one of the preceding claims, in which said longitudinal axis (A) is intended to be inclined by an angle ($\alpha$) greater than 30° and less than or equal to 80° with respect to said normal (H).

**4.** Device according to one of the preceding claims, in which said longitudinal axis (A) is intended to be inclined by an angle ($\alpha$) greater than 40° and less than or equal to 80° with respect to said normal (H).

**5.** Device according to one of the preceding claims, in which it comprises at least two pumps (21, 21') of which the longitudinal axes (A) are intended to be inclined at different angles, of which at least one is greater than 15° and less than or equal to 80° with respect to aforementioned normal (H).

**6.** Device according to the preceding claim, in which the two pumps are arranged in different regions of the tank, at different heights on the tank, a first pump (21) being arranged in a lower part of the tank and having an inclination with respect to the normal (H) by an angle of magnitude less than 15°, and a second pump (21') being arranged mid-way up the height of the tank and having an inclination with respect to the normal (H) by an angle ($\alpha$) of magnitude greater than 15° and less than or equal to 80°.

**7.** Device according to one of the preceding claims, in which said longitudinal axis (A) is an axis of rotation of the rotor of the pump.

**8.** Device according to one of the preceding claims, in which said inlet (21a, 21a') of the pump is oriented towards the bottom of the tank (2, 3).

**9.** Wiper system (1) for a vehicle, particularly a motor vehicle, comprising at least one device for detecting a level of liquid in a liquid tank (2, 3) according to one of the preceding claims.

**10.** Vehicle, particularly motor vehicle, comprising a device for detecting a level of liquid in a liquid tank (2, 3) or a system (1) according to one of the preceding claims.

EP 3 339 115 B1

**Fig. 1**

**Fig. 2**

Fig. 3

Fig. 4

Fig. 5

Fig. 6

Fig. 7

**Fig. 8**

Courant [A]

Temps

$\Delta t$

$t_1$

$t_2$

**Fig. 9**

A

2,3

N1

N2

N2+$\delta$N

N2-$\delta$N

A

21,21'

21a,21a'

**Fig. 10**

21,21'

21a,21a'

21a,21a'

d

$\Sigma \ell$

N2+$\delta$N

N2

N2-$\delta$N

h

90-$\alpha$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2951267 A1